# EUROPEAN PATENT SPECIFICATION

(11) **EP 3 440 333 B1**
(45) Date of publication and mention of the grant of the patent: **26.08.2020**
(21) Application number: 16715495.4
(22) Date of filing: 06.04.2016
(51) Int. Cl.: F02M 26/26, F16K 1/22, F16K 11/052, F16K 1/226

(54) **EXHAUST GAS VALVE DEVICE**
ABGASVENTILVORRICHTUNG
DISPOSITIF DE VANNE DE GAZ D'ÉCHAPPEMENT

(43) Date of publication of application: 13.02.2019
(73) Proprietor: Pierburg GmbH, 41460 Neuss (DE)
(72) Inventor: STERNBAUER, David, Windsor Ontario 1590 (CA)
(74) Representative: terpatent Patentanwälte ter Smitten Eberlein-Van Hoof Rütten Daubert
(86) International application number: PCT/EP2016/057478
(87) International publication number: WO 2017/174121

(56) References cited:
- EP-A2- 1 923 550
- WO-A2-2009/151681
- DE-A1-102013 111 215
- DE-C1- 19 854 461
- US-A- 2 351 613
- US-A1- 2013 167 812

## Description

The invention relates to an exhaust gas valve device.

Exhaust gas valve devices can be used e.g. for selective recirculating of the exhaust gases of an internal combustion engine.

From the state of the art, for instance, exhaust gas valve devices are known which are operative to selectively guide exhaust gases to an exhaust gas cooler or to an air inlet of the internal combustion engine, optionally with an intermediate exhaust gas return valve. The exhaust gases may be redirected to bypass the exhaust gas cooler e.g. during warm-up of the internal combustion engine. An exhaust gas valve device for an internal combustion engine that is formed as butterfly flap is known e.g. from JP 2009-156115 A. The butterfly flap known from this document has the disadvantage that, e.g. in the position in which the bypass duct is closed, the second vane of the butterfly flap will largely project into the opened cooling duct and thus cause a high flow resistance.

In the WO 2009/151681 A1, a bypass flap is disclosed through which an exhaust gas flow is routed either to a cooler or bypassing the cooler. The flap body is elliptical in shape and has sealing edges that allow the flap body to rest against the opposite walls in its two end positions.

The US 2,351,613 describes a three-way valve with a flap body whose sealing edges have an increasing angle to an extension plane of the flap body as the distance to the axis of rotation decreases. The thickness of the flap increases as the distance to the axis of rotation decreases.

It is an object of the invention to provide an exhaust gas valve device for selective recirculating of the exhaust gases of an internal combustion engine wherein said exhaust gas valve device shall have a reduced flow resistance and less leakage in its closed position.

According to the invention, the above object is achieved by the features defined in claim 1.

The exhaust gas valve device for selective recirculating of the exhaust gases of an internal combustion engine as provided according to the invention comprises an exhaust gas feed opening and first and second exhaust gas discharge openings. Via the exhaust gas feed opening, the exhaust gas valve device can be connected to an internal combustion engine on the exhaust side. The first exhaust gas discharge opening can be connected e.g. to an exhaust gas cooler while the second exhaust gas discharge opening can be connected to the air inlet of an internal combustion engine, optionally with interconnection of an exhaust gas return valve.

For selective recirculating of the exhaust gases, the exhaust gas valve device comprises an exhaust gas valve, formed as a butterfly flap, which with the aid of a drive means can be pivoted about a pivot axis in such a manner that, in the first flap position, the exhaust gas feed opening is connected to the first exhaust gas discharge opening and, in the second flap position, the exhaust gas feed opening is connected to the second exhaust gas discharge opening. Preferably, said pivot axis is arranged centrally relative to the two vanes of the butterfly flap. The two vanes of the butterfly flap can have the same length.

According to the invention, the butterfly flap is of an elliptical shape.

Further according to the invention, the butterfly flap in the area of its two main apices along at least a part of its periphery comprises a respective sealing edge.

Said sealing edges can have the largest width on the two main apices and can become smaller, particularly in a continuous manner, starting from the two main apices toward the two secondary apices at the pivot axis of the butterfly flap. The sealing edges are preferably built monolithically with the butterfly flap, meaning that they are made of the same material and are not a separate part.

According to the invention, in the area of the two secondary apices, the elliptical butterfly flap does not comprise a sealing edge and in a sealing zone which extends between the area without sealing edge and the area with the sealing edges the sealing edge incrementally grows without having a distal tip. So starting from its largest width at the two main apices, the sealing edge has become narrower to such an extent that it has a width of 0 at the two secondary apices and preferably in an area around the two secondary apices.

By the elliptical shape of the butterfly flap it is rendered possible to fully close an exhaust gas conduit of e.g. circular-cylindrical cross section while the butterfly flap does not need to be arranged at a right angle to the flow direction of the exhaust gases (i.e. to the longitudinal direction of the exhaust gas conduit). Instead, in the first and second flap position, it is possible to arrange the butterfly flap obliquely in the circular-cylindrical exhaust gas conduit and, at the same time, to achieve a good sealing effect on the edges of the elliptical butterfly flap which rest on the inner wall of the exhaust gas conduit. It is preferred that, along its entire periphery, the butterfly flap, when in its first and second flap position (i.e. at its respective maximum angle) is in full abutment on the inner wall of the exhaust gas conduit.

By the oblique arrangement of the butterfly flap in the exhaust gas conduit in the first flap position and in the second flap position, there can be achieved a particularly flow-effective redirection of the exhaust gases of the internal combustion engine to the first and second exhaust gas discharge opening. In this manner, it is possible to select the elliptical shape to the effect that the butterfly flap is arranged in such a manner within the exhaust gas conduit that, in the first flap position, the exhaust gases will already be guided by the butterfly flap in the direction of the first exhaust gas discharge opening. In the second flap position, in a similar manner, the exhaust gases can be guided by the butterfly flap in the direction of the second exhaust gas discharge opening.

For instance, in the first flap position, the butterfly flap can be arranged at an angle of 30° to 60° relative to the longitudinal direction of the exhaust gas conduit in which the butterfly flap is situated.

In the second flap position, the butterfly flap can be similarly arranged at an angle of 30° to 60° relative to the longitudinal direction of the exhaust gas conduit.

The first flap position is understood to be that position in which the butterfly flap, by both of its main apices and preferably by the entire rest of its periphery, is in abutment on the inner wall of the exhaust gas conduit and, thus, the exhaust gas feed opening is exclusively connected to the first exhaust gas discharge opening and is sealed toward the second exhaust gas discharge opening. In correspondence thereto, also in the second flap position, the butterfly flap is by both of its main apices and preferably by the entire rest of its periphery in abutment on the inner wall of the exhaust gas conduit so that the exhaust gas feed opening is exclusively connected to the second exhaust gas discharge opening and is sealed toward the first exhaust gas discharge opening.

According to a preferred embodiment, the sealing edges have a substantially triangular cross section, wherein, in the area of the two main apices, the distal tips of the triangular sealing edges comprise an angle <X°, preferably <Y°, wherein, in the area of the two main apices, the cross section of the triangular sealing edges comprises an angle between 60° and 120°.

Further, it is preferred that, starting from the two main apices, the sealing edges extend in the peripheral direction of the butterfly flap toward the two secondary apices at angle of at least 75° - 85° in each direction.

Further, by the described contour of the sealing edge of the butterfly flap of the invention, there can be achieved a reduced wear and a longer operating life of the exhaust gas valve device. By the elliptical design of the butterfly flap, there can further be reached an improved sealing effect, particularly in case of higher temperatures.

Further, it is preferred that the drive means is an electric motor. Thus, the exhaust gas valve device of the invention is not actuated by a vacuum drive, thus allowing for a higher safeguarding against failure. As compared to a vacuum drive, the omission of a vacuum pump and further components makes it possible to reduce costs.

Further, it is preferred to provide an angle sensor for determining the opening angle of the butterfly flap. The information of this sensor can be used e.g. for the on-board diagnostics of a vehicle, and for testing the functionality of the exhaust gas valve device.

As an angle sensor for determining the opening angle of the butterfly flap, use can be made e.g. of a triaxial Hall sensor which is programmed in such a manner that, for instance, an overall movement of the butterfly flap from the first flap position to the second flap position by 70° will lead to a voltage difference of 3V (with Uref = 5V).

For fail-safe operation, a spring can be provided by which, in case of failure of the drive means, the butterfly flap will always be held in the first flap position.

In order to achieve a precise control of the opening angle of the butterfly flap, a closed control circuit can be used.

Further, the use of an electric motor makes it possible to achieve a faster reaction in comparison with a pneumatic actuator. Also, it is possible to provide a higher moment of rotation for movement of the butterfly flap in both directions.

The invention further relates to a method for selectively recirculating of the exhaust gases of an internal combustion engine by using the inventive exhaust gas valve device. The method comprises the following steps:
The butterfly flap is controlled to an intermediate position in which both of the first and second exhaust gas discharge openings are connected to the exhaust gas feed opening. The ratio between the amount of gas flowing from the exhaust gas feed opening to the first exhaust gas discharge opening and the amount of gas flowing from the exhaust gas feed opening to the second exhaust gas discharge opening is controlled by the position of the butterfly flap.

This method allows to recirculate some part of the exhaust gas through the exhaust gas cooler, and the remaining exhaust gas to bypass the exhaust gas cooler directly to the intake of the engine. This function can be used, for example, in order to achieve intermediate exhaust gas temperatures at the intake of the combustion engine.

Hereunder, preferred embodiments of the invention will be explained with reference to the Figures.

The following is illustrated:
Figures 1a and 1b show a cross-sectional view of an embodiment of the exhaust gas valve device of the invention in the first and second flap positions.
Figure 2a shows an embodiment of the butterfly flap of the invention in plan view.
Figure 2b shows an embodiment of the butterfly flap of the invention in cross-sectional view.
Figure 2c shows an enlarged view of the portion marked in Figure 2b.
Figures 2d - 2f show further details of the butterfly flap.
Figure 3 is a sectional view of an embodiment of the exhaust gas valve device of the invention.

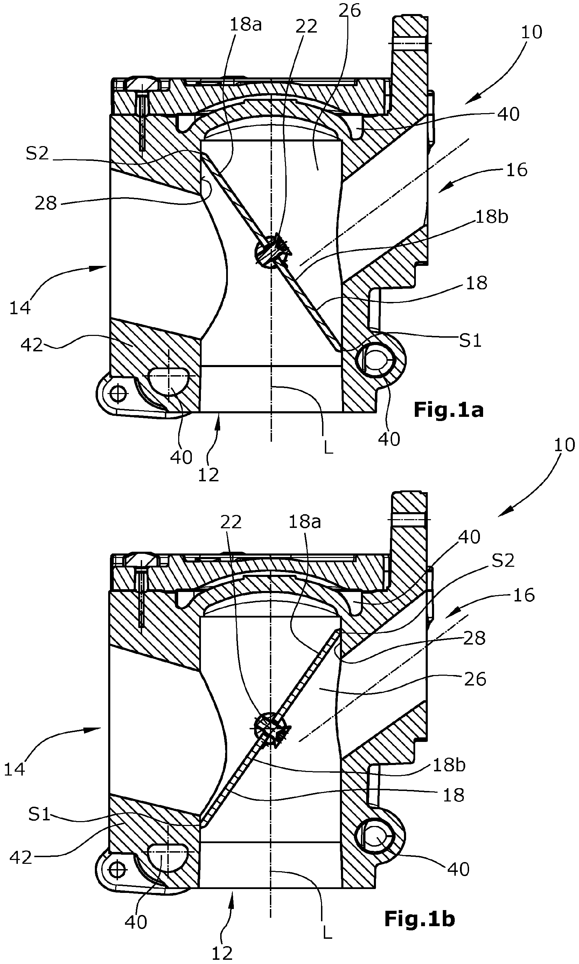

Illustrated in Figure 1a is an embodiment of the exhaust gas valve device 10 of the invention wherein the butterfly flap 18 is in the first flap position. In this position, the exhaust gas feed opening 12 is exclusively connected to the first exhaust gas discharge opening 14 and is sealed toward the second exhaust gas discharge opening 16. For this purpose, butterfly flap 18 is pivoted fully to the left about the pivot axis 22 and is arranged at an angle of 35° relative to the longitudinal axis I of the exhaust gas conduit 26, Preferably, pivot axis 22 is arranged centrally in the exhaust gas conduit 26 which has a circular cross section.

In the first flap position, in the area of the second main apex S₂, the edge of the first vane 18a of butterfly flap 18 is in abutment on an area of the inner wall 28 of exhaust gas conduit 26 that is arranged above the first exhaust gas discharge opening 14. At the same time, in the area of the first main apex S₁, the edge of the second vane 18b of butterfly flap 18 is in abutment on an area of the inner wall 28 of exhaust gas conduit 26 that is arranged below the second exhaust gas discharge opening 16. In these areas in which the butterfly flap is in abutment on the inner wall of exhaust gas conduit 26, there is respectively arranged a sealing edge 24a, 24b by which a sealing effect toward the second exhaust gas discharge opening 16 can be obtained.

In Figure 1b, the butterfly flap 18 is in the second flap position so that the exhaust gas feed opening 12 is exclusively connected to the second exhaust gas discharge opening 16 and is sealed toward the first exhaust gas discharge opening 14. Also here, a sealing effect is provided by the two sealing edges 24, 24b which are in abutment on the inner wall 28 of exhaust gas conduit 26. By the preferably triangular design of the sealing edges in cross section, a particularly good sealing effect can be accomplished toward the inner wall 28 of exhaust gas conduit 26 because the sealing edge is in abutment on inner wall 28 via a larger surface area.

For achieving a lower flow resistance, it is preferred that the conduits which respectively follow the exhaust gas discharge opening 14 and the exhaust gas discharge opening 16, extend at an acute angle to the longitudinal direction I of the exhaust gas conduit 26. Thus, it can be accomplished that, in the first and respectively second flap position, the exhaust gases do not need to be redirected fully, i.e. for instance by 90°, but merely at an angle smaller than 90°. If the exhaust gas feed conduits are e.g. arranged at an angle of 50° to the longitudinal direction I, the exhaust gases have to be redirected only by 50° so that, in this manner, an improved flow resistance can be achieved.

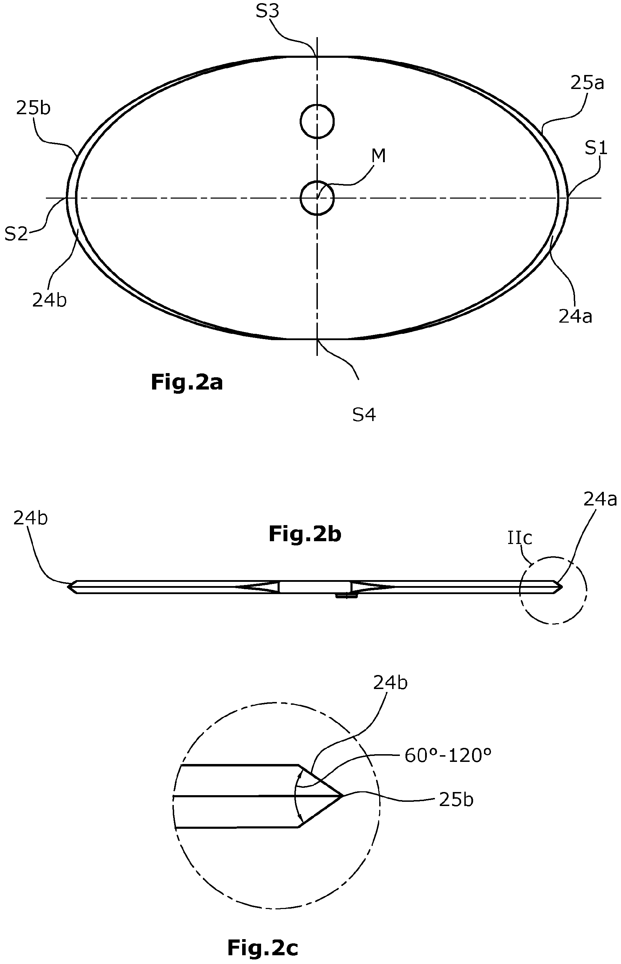

Figure 2a shows an embodiment of the butterfly flap 18 of the invention in plan view. In the Figure, it can be seen that the sealing edges 24a, 24b have their largest width at the first and second main apices S₁, S₂ and, starting from there, continuously decrease in width in the direction of the secondary apices S₃, S₄ and do not exist anymore at the secondary apices.

In Figure 2b, the triangular cross-sectional shape of the sealing edges 24a, 24b can be seen. Thus, in the first and second flap position, a particularly good sealing effect against the inner wall 28 of the exhaust gas conduit 26 can be obtained.

In Figure 2c, the angle of the triangular cross section of the sealing edges 24a, 24b is shown. This angle can be in the range between 60° and 120° and depends on the angle of the end position of the butterfly flap compared to the inner wall 28 of the exhaust gas conduit 26.

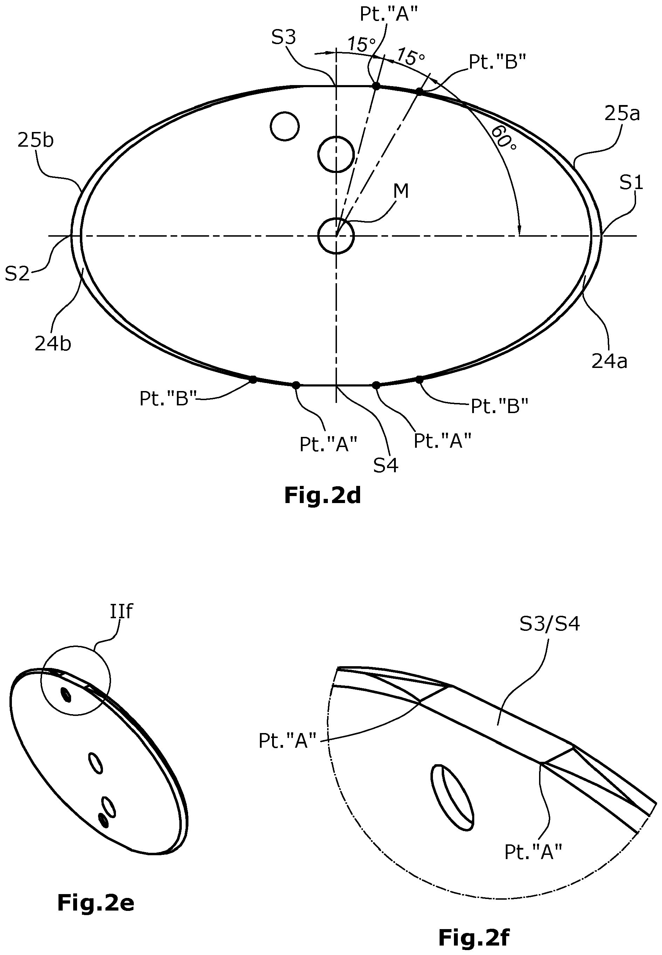

Figures 2d, 2e and 2f show the construction of the sealing edge 24a, 24b in more detail. As can be seen in figure 2d, in the area between the secondary apex S3 and point A there is no sealing edge. This area without sealing edge can extend for example over an angle of 15°. Between point A and B there is a sealing zone in which the sealing edge incrementally grows. However, in this sealing zone, the sealing edge does not have a distal tip 25a, 25b which is shown for example in figure 2c. The sealing zone in which the sealing edge has a distal tip extends from point B to the main apex S1. Of course, the same features will be present in the other three quarters of the butterfly flap which are not further described in figure 2d.

The area between the two points A is shown in more detail in Figure 2f which shows part F of figure 2e.

By these features, it can be achieved that the sealing edge does not obstruct the rotation of the butterfly flap in the area close to the secondary apices S3 and S4.

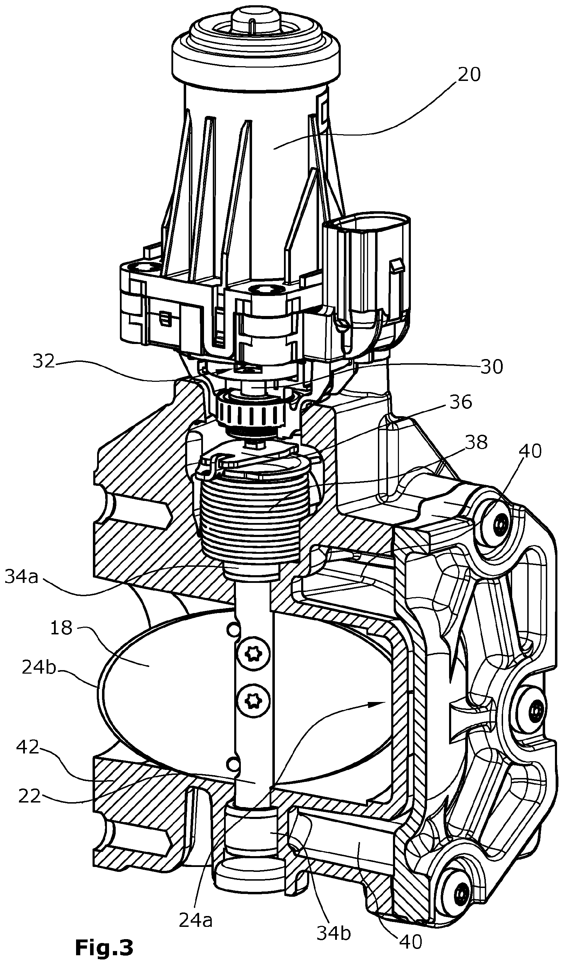

Figure 3 shows an exemplary design of an embodiment of the exhaust gas valve device 10 of the invention. The pivot axis 22 is driven by an electric motor 20. For determining the opening angle of butterfly flap 18, an angle sensor 30 in the form of a Hall sensor is provided. Between electric motor 20 and pivot axis 22, a planetary gear 32 can be provided. Above and below butterfly flap 18, the pivot axis 22 is supported in two bearings 34a, 34b.

In a second function mode, the butterfly flap can be controlled to intermediate positions between the first and second gas discharge opening 14, 16. Thereby it is possible to selectively control the flow rate ratio through each exhaust conduit. This allows to direct a part of the exhaust gas through the exhaust gas cooler and the remaining exhaust gas to bypass the exhaust gas cooler directly to the intake of the engine. This function can be used in case intermediate exhaust gas temperatures have to be achieved at the intake of the combustion engine.

## Claims

1. An exhaust gas valve device (10) for selective recirculating of the exhaust gases of an internal combustion engine, comprising an exhaust gas feed opening (12),
a first and a second exhaust gas discharge opening (14, 16),
an exhaust gas valve formed as a butterfly flap, which with the aid of a drive means (20) can be pivoted about a pivot axis (22) between a first and a second flap position in such a manner that, in the first flap position, the exhaust gas feed opening (12) is connected to the first exhaust gas discharge opening (14) and, in the second flap position, the exhaust gas feed opening (12) is connected to the second exhaust gas discharge opening (16),
**characterized in that**
the butterfly flap (18) is of an elliptical design,
the butterfly flap (18) in the area of its two main apices S₁, S₂ comprises a respective sealing edge (24a, 24b) along a part of its periphery,
whereby the sealing edges (24a, 24b) have the largest width on the two main apices S₁, S₂ and become continuously smaller starting from the two main apices S₁, S₂ toward the two secondary apices S₃, S₄ at the pivot axis (22) of the butterfly flap,
whereby in an area around the secondary apices S₃, S₄ no sealing edge is formed at the butterfly flap (18) and in a sealing zone which extends between the area without sealing edge and the area with the sealing edges (24a, 24b) the sealing edge incrementally grows without having a distal tip.

2. The exhaust gas valve device (10) according to claim 1,
**characterized in that**
the sealing edges (24a, 24b) have a substantially triangular cross section and, in the area of the two main apices S₁, S₂, the distal tip of the triangular sealing edges comprises an angle, depending on the maximum rotation of the butterfly flap (18) between the inner wall (28) of the exhaust gas conduit (26).

3. The exhaust gas valve device (10) according to claim 2,
**characterized in that**
the angle of the triangular sealing edge has its minimum at the two main apices S₁, S₂ and is continuously increased starting from the two main apices S₁, S₂ towards the two secondary apices S₃, S₄, so that at the two secondary apices S₃, S₄, the butterfly flap (18) does not comprise a sealing edge.

4. The exhaust gas valve device (10) according to claim 3,
**characterized in that**
the minimum angle of the triangular sealing edge at the two main apices S₁, S₂ is between 60° and 120°.

5. The exhaust gas valve device (10) according to any one of claims 1 to 4,
**characterized in that,**
starting from the two main apices S₁, S₂, the sealing edges (24a, 24b) extend in the peripheral direction of the butterfly flap (18) toward the two secondary apices S3, S4 at an angle of at least 75° - 85° in each direction.

6. The exhaust gas valve device (10) according to any one of claims 1 to 4,
**characterized in that,**
starting from the two apices S₃, S₄, the area without sealing edges extend in the peripheral direction of the butterfly flap (18) toward the main apices S₁, S₂ at an angle of 15° in each direction and the sealing zone between the area without sealing edge and the area with the sealing edges (24a, 24b), in which the sealing edge incrementally grows without having a distal tip, extend over an angle of 15°.

7. The exhaust gas valve device (10) according to any one of claims 1 to 6,
**characterized in that**
the drive means (20) is an electric motor.

8. The exhaust gas valve device (10) according to any one of claims 1 to 7,
**characterized by**
a mechanical lever connection (36) between the pivot axis (22) of the butterfly flap (18) and the planetary gear (32) of the electrical actuator with a return spring (38) function.

9. The exhaust gas valve device (10) according to any one of claims 1 to 8,
**characterized by**
an angle sensor for determining the angular position of the butterfly flap (18) between the open and closed position.

10. The exhaust gas valve device (10) according to any one of claims 1 to 9,
**characterized by**
an integrated cooling circuit (40) inside the housing for thermal management to protect the electrical actuator system (20, 30 and 32) from overheating as well as maintaining an acceptable temperature range for the bearing system (34a and 34b) and housing (42) of the exhaust gas valve device (10).

## Patentansprüche

1. Abgasventilvorrichtung (10) zur selektiven Rezirkulation der Abgase eines Verbrennungsmotors, mit:
einer Abgaszufuhröffnung (12),
einer ersten und einer zweiten Abgasauslassöffnung (14, 16),
einem Abgasventil, das als Drosselklappe ausgebildet ist, die mit Hilfe einer Antriebseinrichtung (20) um eine Schwenkachse (22) zwischen einer ersten und einer zweiten Klappenposition derart schwenkbar ist, dass in der ersten Klappenposition die Abgaszuführöffnung (12) mit der ersten Abgasauslassöffnung (14) verbunden ist, und in der zweiten Klappenposition die Abgaszufuhröffnung (12) mit der zweiten Abgasauslassöffnung (16) verbunden ist,
**dadurch gekennzeichnet ist, dass**
die Drosselklappe (18) ellipsenförmig ist,
wobei die Drosselklappe (18) im Bereich ihrer beiden Hauptscheiteln S₁, S₂ eine jeweilige Dichtkante (24a, 24b) entlang eines Teils ihres Umfangs aufweist,
wobei die Dichtkanten (24a, 24b) die größte Breite an den beiden Hauptscheiteln S₁, S₂ aufweisen und ausgehend von den beiden Hauptscheiteln S₁, S₂ in Richtung der beiden Nebenscheitel S₃, S₄ an der Schwenkachse (22) der Drosselklappe kontinuierlich kleiner werden,
wobei in einem Bereich um die Nebenscheitel S₃, S₄ keine Dichtkante an der Drosselklappe (19) ausgebildet ist, und in einer Dichtzone, die sich zwischen dem Bereich ohne Dichtkante und dem Bereich mit Dichtkante (24a, 24b), erstreckt, die Dichtkante inkrementell wächst, ohne eine distale Spitze aufzuweisen.

2. Abgasventilvorrichtung (10) nach Anspruch 1, **dadurch gekennzeichnet, dass** die Dichtkanten (24a, 24b) einen im Wesentlichen dreieckigen Querschnitt aufweisen und die distale Spitze der dreieckigen Dichtkanten im Bereich der beiden Hauptscheitel S₁, S₂ einen Winkel aufweisen, der von der maximalen Drehung der Drosselklappe (18) zwischen der Innenwand (28) der Abgasleitung (26) abhängt.

3. Abgasventilvorrichtung (10) nach Anspruch 2, **dadurch gekennzeichnet, dass** der Winkel der dreieckigen Dichtkante sein Minimum an den beiden Hauptscheiteln S₁, S₂ und sich ausgehend von den beiden Hauptscheiteln S₁, S₂ in Richtung der beiden Nebenscheitel S₃, S₄ kontinuierlich vergrößert, so dass an den beiden Nebenscheitel S₃, S₄ die Drosselklappe (18) keine Dichtkante aufweist.

4. Abgasventilvorrichtung (10) nach Anspruch 3 ist **dadurch gekennzeichnet, dass** der Mindestwinkel der dreieckigen Dichtkante an den beiden Hauptscheiteln S₁, S₂ zwischen 60° und 120° liegt.

5. Abgasventilvorrichtung (10) nach einem der Ansprüche 1 bis 4, **dadurch gekennzeichnet, dass** sich ausgehend von den beiden Hauptscheiteln S₁, S₂ die Dichtkanten (24a, 24b) in Umfangsrichtung der Drosselklappe (18) in Richtung der beiden Nebenscheitel S₃, S₄ in einem Winkel von mindestens 75° - 85° in jeder Richtung erstrecken.

6. Abgasventilvorrichtung (10) nach einem der Ansprüche 1 bis 4, **dadurch gekennzeichnet, dass** sich ausgehend von den beiden Scheiteln S₃, S₄ der Bereich ohne Dichtkanten sich in Umfangsrichtung der Drosselklappe (18) in einem Winkel von 15° in jeder Richtung erstreckt, und die Dichtzone zwischen dem Bereich ohne Dichtkante und dem Bereich mit den Dichtkanten 24a, 24b), in welchem die Dichtkante inkrementell wächst, ohne eine distale Spitze aufzuweisen, sich in einem Winkel von 15° erstrecken.

7. Abgasventilvorrichtung (10) nach einem der Ansprüche 1 bis 4, **dadurch gekennzeichnet, dass** die Antriebseinrichtung (20) ein Elektromotor ist.

8. Abgasventilvorrichtung (10) nach einem der Ansprüche 1 bis 7, **gekennzeichnet durch** eine mechanische Hebelverbindung (36) zwischen der Schwenkachse (22) der Drosselklappe (18) und dem Planetenrad (32) des elektrischen Aktuators mit einer Rückstellfederfunktion (38).

9. Abgasventilvorrichtung (10) nach einem der Ansprüche 1 bis 8, **gekennzeichnet durch** einen Winkelsensor zum Bestimmen der Winkelposition der Drosselklappe (18) zwischen der offenen und der geschlossenen Position.

10. Abgasventilvorrichtung (10) nach einem der Ansprüche 1 bis 9, **gekennzeichnet durch** einen integrierten Kühlkreislauf (40) in dem Gehäuse für das Wärmemanagement, um das elektrische Aktuatorsystem (20, 30 und 32) vor Überhitzung zu schützen sowie zum Aufrechterhalten eines akzeptablen Temperaturbereichs für das Lagersystem (34a und 34b) und das Gehäuse (42) der Abgasventilvorrichtung (10).

## Revendications

1. Dispositif de vanne de gaz d'échappement (10) pour la recirculation sélective des gaz d'échappement d'un moteur à combustion interne, avec
une ouverture d'alimentation de gaz d'échappement (12),
une première et une deuxième ouverture de décharge de gaz d'échappement (14, 16),
une vanne de gaz d'échappement d'un papillon qui, à l'aide d'un moyen d'entrainement (20), peut être pivoté autour d'un axe de pivotement (22) entre une première et une seconde position du papillon de telle manière que, dans la première position du papillon, l'ouverture d'alimentation gaz de d'échappement (12) est connectée à la première ouverture de décharge des gaz d'échappement (14) et, dans la seconde position du papillon, l'ouverture d'alimentation des gaz d'échappement (12) est connectée à la deuxième ouverture de décharge des gaz d'échappement (16),
**caractérisé en ce que**
le papillon (18) est de forme ellipsoïdale,
le papillon (18) comprend, dans la zone de ses deux sommets principaux S₁, S₂, un bord d'étanchéité (24a, 24b) respectif le long d'une partie de sa périphérie,
les bords d'étanchéité (24a, 24b) ont la plus grande largeur sur les deux sommets principaux S₁, S₂ et deviennent continûment plus petit à partir des deux sommets principaux S₁, S₂ vers les deux sommets secondaires S₃, S₄ à l'axe de pivotement (22) du papillon,
aucun bord d'étanchéité est formé au papillon (18) dans une zone autour des sommets principaux S₁, S₂, et dans une zone s'étendant entre la zone sans bord d'étanchéité et la zone avec bords d'étanchéité (24a, 24b), les bords d'étanchéité croissant de manière incrémentelle sans pointe distale.

2. Dispositif de vanne de gaz d'échappement (10) selon la revendication 1, **caractérisé en ce que** les bords d'étanchéité (24a, 24b) ont une section transversale sensiblement triangulaire et, dans la zone des deux sommets principaux S₁, S₂, la pointe distale des bords d'étanchéité triangulaires comprend un angle, en fonction de la rotation maximale du papillon (18) entre la paroi intérieure (28) du conduit de gaz d'échappement (26).

3. Dispositif de vanne de gaz d'échappement (10) selon la revendication 2, **caractérisé en ce que** l'angle du bord d'étanchéité triangulaire a son minimum aux deux sommets principaux S₁, S₂ et est continûment augmenté à partir des deux sommets principaux S₁, S₂, vers les deux sommets secondaires S₃, S₄, de sorte qu'au niveau des deux sommets secondaires S₃, S₄, le papillon (18) ne comporte pas de bord d'étanchéité.

4. Dispositif de vanne de gaz d'échappement (10) selon la revendication 3, **caractérisé en ce que** l'angle minimum du bord d'étanchéité triangulaire aux deux sommets principaux S₁, S₂ est compris entre 60° et 120°.

5. Dispositif de vanne de gaz d'échappement (10) selon l'une des revendications 1 à 4, **caractérisé en ce qu'**à partir des deux sommets principaux S₁, S₂, les bords d'étanchéité (24a, 24b) s'étendent dans la direction périphérique du papillon (18) vers les deux sommets secondaires S₃, S₄ selon un angle d'au moins 75° - 85° dans chaque direction.

6. Dispositif de vanne de gaz d'échappement (10) selon l'une des revendications 1 à 4, **caractérisé en ce qu'**à partir des deux sommets S₃, S₄, la zone sans bord d'étanchéité (24a, 24b) s'étend dans la direction périphérique du papillon (18) vers les sommets principaux S₁, S₂ sous un angle de 15° dans chaque direction, et la zone d'étanchéité entre la zone sans bord d'étanchéité et la zone avec les bords d'étanchéité (24a, 24b), dans laquelle le bord d'étanchéité croit de manière incrémentelle sans pointe distale, s'étendent sur an angle de 15°.

7. Dispositif de vanne de gaz d'échappement (10) selon l'une quelconque des revendications 1 à 6, **caractérisé en ce que** le moyen d'entrainement (20) est un moteur électrique.

8. Dispositif de vanne de gaz d'échappement (10) selon l'une des revendications 1 à 7, **caractérisé par** une liaison mécanique à levier (36) entre l'axe de pivotement (22) du papillon (18) et l'engrenage planétaire (32) de l'actionneur électrique avec fonction ressort de rappel (38).

9. Dispositif de vanne de gaz d'échappement (10) selon l'une des revendications 1 à 8, **caractérisé par** un capteur d'angle pour déterminer la position angulaire du papillon (18) entre la position ouverte et fermée.

10. Dispositif de vanne de gaz d'échappement (10) selon l'une des revendications 1 à 9, **caractérisé par** un circuit de refroidissement (40) intégré à l'intérieur du boitier pour la gestion thermique servant de protéger le système d'actionneur électrique (20, 30 et 32) contre la surchauffe également comme maintenant une plage de température acceptable pour le système de palier (34a et 34b) et le boitier (42) du dispositif de vanne de gaz d'échappement (10).
